# EUROPÄISCHE PATENTSCHRIFT

(11) **EP 4 046 256 B1**
(45) Veröffentlichungstag und Bekanntmachung des Hinweises auf die Patenterteilung: **27.09.2023**
(21) Anmeldenummer: 20786562.7
(22) Anmeldetag: 07.10.2020
(51) Int. Cl.: H02J 9/06, B60R 16/03

(54) **STEUERGERÄTESCHALTUNG FÜR EIN KRAFTFAHRZEUG SOWIE KRAFTFAHRZEUG UND BETRIEBSVERFAHREN FÜR DIE STEUERGERÄTESCHALTUNG**
CONTROL UNIT CIRCUIT FOR A MOTOR VEHICLE, MOTOR VEHICLE AND OPERATING METHOD FOR THE CONTROL UNIT CIRCUIT
CIRCUIT D'UNITÉ DE COMMANDE POUR VÉHICULE AUTOMOBILE, VÉHICULE AUTOMOBILE ET PROCÉDÉ DE FONCTIONNEMENT DU CIRCUIT D'UNITÉ DE COMMANDE

(30) Priorität: 14.10.2019 DE 102019215790
(43) Veröffentlichungstag der Anmeldung: 24.08.2022
(73) Patentinhaber: Continental Automotive Technologies GmbH, 30165 Hannover (DE)
(72) Erfinder: STANG, Udo, 81739 München (DE); SCHMITTSCHMITT, Herbert, 81739 München (DE)
(74) Vertreter: Continental Corporation
(86) Internationale Anmeldenummer: PCT/EP2020/078073
(87) Internationale Veröffentlichungsnummer: WO 2021/073965

(56) Entgegenhaltungen:
- EP-A1- 0 584 499
- EP-A1- 3 349 326
- DE-A1- 10 002 537
- DE-A1- 10 020 305
- DE-A1-102009 053 653
- DE-A1-102014 017 571
- DE-C1- 10 113 081
- DE-C1- 19 633 202

## Beschreibung

Die Erfindung betrifft eine elektrische Schaltung, in der ein Steuergerät und ein elektrischer Energiespeicher für eine Notversorgung des Steuergeräts zusammengeschaltet sind. Diese Schaltung wird hier als Steuergeräteschaltung bezeichnet. Zu der Erfindung gehören auch ein Kraftfahrzeug, das mit der Steuergeräteschaltung ausgestattet ist, sowie ein Verfahren zum Betreiben der Steuergeräteschaltung.

EP 3 349 326 A offenbart eine Steuergeräteschaltung für ein Kraftfahrzeug.

Um in einem Kraftfahrzeug ein Steuergerät auch nach einem Unfall (Crash) selbst für den Fall betriebsfähig zu halten, dass das elektrische Bordnetz des Kraftfahrzeugs ausfällt, kann eine zusätzliche Energieversorgung durch einen elektrischen Energiespeicher vorgesehen sein. Ein Beispiel für ein solches Steuergerät ist das sogenannte E-Call-Modul zum Absetzen eines Notrufs nach einem Crash. Ein solcher E-Call-Dienst wird unterbrechungsfrei durch eine Backup-Batterie versorgt, wenn die Verbindung zur Plus-Leitung des elektrischen Bordnetzes (sogenannte Klemme-30-Leitung, KL30) unterbrochen ist. Eine geeignete Backup-Batterie kann durch einen Lithium-Ionen-Akkumulator realisiert sein.

Aus Platzgründen kann hierbei vorgesehen sein, dass die Backup-Batterie oder allgemein der elektrische Energiespeicher außerhalb des Steuergeräts angeordnet und mit diesem über ein Kabel verschaltet ist. Dadurch besteht aber nun die Möglichkeit, dass bei Beschädigung des Kabels eine von dessen Versorgungsleitungen oder Adern mit dem Bordnetz einen elektrischen Kontakt bekommt, also mit der Plus-Leitung oder dem Massepotential des Bordnetzes kurzgeschlossen wird. Während im Bordnetz in der Regel eine elektrische Spannung mit einem Nennwert von 12 Volt vorliegt, wird der besagte elektrische Energiespeicher für die Notversorgung des Steuergeräts mit einer Nennspannung kleiner als 12 Volt, beispielsweise 4 Volt, betrieben. Dabei wird der Minuspol des elektrischen Energiespeichers mit dem Massepotential des Kraftfahrzeugs elektrisch verbunden gehalten, um das Potential der beiden Stromkreise nicht auseinanderdriften zu lassen. Berührt nun beispielsweise aufgrund eines beschädigten Kabels des elektrischen Energiespeichers dessen Pluspol die Plus-Leitung des Bordnetzes, so liegt auch an dem elektrischen Energiespeicher die Bordnetzspannung, also beispielsweise 12 Volt, an, was den elektrischen Energiespeicher durch Überspannung oder durch einen zu großen Ladestrom beschädigen kann, beispielsweise aufgrund von Überhitzung und/oder Ausgasung. Allgemein ist die Reaktion aber unvorhersehbar. Dann wäre der Betrieb des Steuergeräts nach einem Crash nicht mehr gewährleistet.

Eine Steuergeräteschaltung mit einem Steuergerät und einem für dieses vorgesehenen elektrischen Energiespeicher zur Notversorgung ist beispielsweise aus der DE 196 33 202 C1 bekannt. Eine Notbetriebsschaltung schaltet das Steuergerät bei Unterspannung von dem Bordnetz des Kraftfahrzeugs auf den Energiespeicher um.

Der Erfindung liegt die Aufgabe zugrunde, in einer Steuergeräteschaltung mit Steuergerät und zugehöriger, über ein Kabel angebundener Notversorgung auch für den Fall den Betrieb des Steuergeräts zu verhindern, dass durch eine elektrische Verbindung zwischen einem Pol des Energiespeichers der Notversorgung und einem spannungsführenden Element des Bordnetzes des Kraftfahrzeugs der Energiespeicher durch eine Überspannung und/oder einen zu großen Ladestrom beschädigt wird.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist die besagte Steuergeräteschaltung für ein Kraftfahrzeug bereitgestellt. Mit "Steuergeräteschaltung" ist hier die besagte Kombination aus einem Steuergerät zum Bereitstellen einer Fahrzeugfunktion und einem außerhalb eines Gehäuses des Steuergeräts angeordneten elektrischen Energiespeicher für eine Notversorgung des Steuergeräts gemeint. Ein Beispiel für die Fahrzeugfunktion, die durch das Steuergerät bereitgestellt werden kann, ist die bereits beschriebene E-Call-Funktion. Bei dem elektrischen Energiespeicher kann es sich um einen elektrischen oder elektrochemischen Akkumulator, beispielsweise eine Lithium-Ionen-Batterie, handeln. Der Energiespeicher ist von dem Energiespeicher des elektrischen Bordnetzes des Kraftfahrzeugs verschieden und kann insbesondere eine Nennspannung bereitstellen, die kleiner als die Nennspannung des Bordnetzes ist, insbesondere weniger als halb so groß wie die Nennspannung des Bordnetzes. Die Erfindung geht davon aus, dass der Energiespeicher für die Notversorgung dazu eingerichtet ist, das Steuergerät mit elektrischer Energie zu versorgen, falls ein Versorgungsstrom aus dem Bordnetz des Kraftfahrzeugs ausbleibt. Das Umschalten von dem Versorgungsstrom des Bordnetzes auf den elektrischen Energiespeicher kann in aus dem Stand der Technik bekannter Weise erfolgen.

Um den Energiespeicher im Kraftfahrzeug von dem Steuergerät beabstandet einbauen zu können, sind die beiden Pole des Energiespeichers (Pluspol und Minuspol) über ein Kabel mit dem Steuergerät verschaltet. Das Kabel kann zu jedem Pol eine Versorgungsleitung oder Ader für die elektrische Verbindung bereitstellen. Jede Versorgungsleitung kann durch einen Draht oder ein Litze realisiert sein.

Um eine Potentialdrift zwischen dem Stromkreis der Notversorgung (mit dem elektrischen Energiespeicher) einerseits und dem Bordnetz des Kraftfahrzeugs andererseits zu vermeiden, ist vorgesehen, dass einer der beiden elektrischen Pole über ein Schaltelement mit einem Massepotential des Bordnetzes verschaltet ist. Bevorzugt ist es der Minuspol. Das Schaltelement kann dabei in dem Steuergerät oder in dem Energiespeicher oder an dem Kabel vorgesehen sein. Denn es kann ausreichend sein, wenn der eine Pol des Energiespeichers "indirekt" in dem Steuergerät über das Kabel mit dem Massepotential verbunden ist. Eine andere Bezeichnung für das besagte Massepotential des Bordnetzes ist "Fahrzeugmasse", die beispielsweise in einem Fahrzeugblech oder Fahrzeugträger oder dem Chassis bereitgestellt sein kann. Das Massepotential ist in einem Kraftfahrzeug allgemein durch dessen Strukturbauteile bereitgestellt. Da sowohl in dem Steuergerät als auch in dem Kabel als auch am Energiespeicher selbst eine elektrische Verbindung zu den beiden Polen des Energiespeichers besteht, kann das besagte Schaltelement an einer dieser Stellen angeordnet sein. Als Schaltelement kann beispielsweise ein Halbleiterschalter, beispielsweise ein Transistor, vorgesehen sein.

Es ist bei der erfindungsgemäßen Steuergeräteschaltung nun zumindest eine Messschaltung vorgesehen, die jeweils einen der Pole des Energiespeichers (Pluspol oder Minuspol) mit dem Massepotential koppelt und dazu eingerichtet ist, ein Messsignal zu erzeugen, das mit einer elektrischen Spannung korreliert oder von dieser abhängig ist, die zwischen dem jeweiligen Pol des Energiespeichers und dem Massepotential abfällt. Mit einer solchen Messschaltung kann also gemessen werden, welche elektrische Spannung zwischen dem jeweiligen Pol und dem Massepotential vorliegt oder, wenn lediglich ein Schwellenwertvergleich implementiert ist, ob die elektrische Spannung größer oder kleiner als ein vorgegebener Schwellenwert ist. Das Messsignal muss also nur insoweit mit der elektrischen Spannung korreliert sein, dass durch das Messsignal signalisiert ist, ob die elektrische Spannung größer oder kleiner als der Schwellenwert ist. Es kann aber auch das Messsignal mit der elektrischen Spannung übereinstimmen oder eine skalierte Variante der elektrischen Spannung darstellen, wie es beispielsweise mittels eines Spannungsteilers erreicht werden kann. Die Messschaltung kann, wie das Schaltelement, in dem Steuergerät, an dem Kabel oder direkt an dem Energiespeicher mit dem Pol verschaltet sein.

Eine Steuerschaltung des Schaltelements (das den einen Pole des Energiespeichers mit dem Massepotential des Bordnetzes verbindet) ist dazu eingerichtet, das Schaltelement in einem Normalbetrieb des Steuergeräts (wenn der Versorgungsstrom aus dem Bordnetz verfügbar ist) elektrisch leitend geschaltet zu halten und aber zumindest für den Fall, dass durch das jeweilige Messsignal der zumindest einen Messschaltung signalisiert ist, dass die jeweilige Spannung (zwischen dem durch diese Messschaltung überwachten Pol und dem Massepotential) größer als ein vorbestimmter Schwellenwert ist, das Schaltelement elektrisch sperrend zu schalten und damit die durch das elektrische Schaltelement bewirkte Kopplung zwischen Kabel und Massepotential aufzuheben oder zu unterbrechen. Damit sind also die Potential dieses zuvor gekoppelten Pols und dem Massepotential nun entkoppelt oder getrennt.

Kommt es nun zu einem Kurzschluss zwischen dem Bordnetz und einem Pol des Energiespeichers, weil beispielsweise bei einem Stecker des besagten Kabels die Kontaktstifte verbogen sind und sich berühren oder die Isolierung des Kabels aufgescheuert wird, so wird dieser Pol zwar auf das Potential der Bordnetzleitung gezogen, im Falle der Plus-Leitung des Bordnetzes also auf beispielsweise 12 Volt oder allgemein auf die Bordnetzspannung. Allgemein ist ein Schutz des Energiespeichers vor Fehlströmen notwendig, die den Energiespeicher überlasten und die beschriebene unerwünschte Reaktion hervorrufen könnten. Die Messschaltung dieses Pols kann dann aber erkennen, dass die elektrische Spannung zwischen diesem Pol und dem Massepotential des Bordnetzes sich verändert. Überschreitet die Spannung den besagten Schwellenwert, so wird die andere elektrische Kopplung zwischen dem Massepotential und dem Kabel, wie sie nämlich durch das Schaltelement bewirkt ist, unterbrochen oder aufgehoben. Damit bleibt nur die eine Stelle des Kurzschlusses als einzige elektrische Verbindung zwischen dem Stromkreis der Notversorgung einerseits und dem Bordnetz andererseits. Der Stromkreis wird dann also auf das Potential des Bordnetzes angehoben, ohne dass hierbei ein Strom fließen könnte, weil die zweite elektrisch Kopplung über das Schaltelement unterbrochen ist. Damit lässt sich aber der Stromkreis der Notversorgung weiter betreiben, selbst wenn beispielsweise durch einen fehlerhaften Stecker oder eine beschädigte elektrische Isolierung des Kabels ein elektrischer Kontakt zwischen einem Pol des Energiespeichers und der Plus-Leitung des Bordnetzes verursacht wird.

Die Erfindung umfasst auch Ausführungsformen, durch die sich zusätzliche Vorteile ergeben.

In einer Ausführungsform weist die Steuerschaltung einen Signaleingang zum Empfangen eines Schaltsignals auf und ist dazu eingerichtet, das Schaltelement in Abhängigkeit von dem Schaltsignal elektrisch sperrend zu schalten. Zusätzlich zu der zumindest einen Messschaltung kann also über den Signaleingang ebenfalls erreicht werden, dass die Steuerschaltung das Schaltelement elektrisch sperrend schaltet. Somit kann beispielsweise von einem Mikrocontroller aus die Kontrolle über die durch das Schaltelement bewirkte Kopplung zwischen Kabel und Massepotential bereitgestellt werden. Der Signaleingang kann als ein elektrischer Kontakt oder Pin realisiert sein.

In einer Ausführungsform ist in diesem Zusammenhang vorgesehen, dass das Steuergerät dazu eingerichtet ist, eine Prüfroutine zum Überprüfen eines Isolationswiderstands des Kabels durchzuführen und hierbei zu Beginn der Prüfroutine das Schaltsignal an dem Steuereingang der Steuerschaltung zu erzeugen. Somit kann also die Prüfroutine bei unterbrochener elektrischer Kopplung zwischen Kabel und Massepotential durchgeführt werden. Hierdurch ergibt sich der Vorteil, dass die Prüfroutine umfassen kann, dass ein Masse-Fehlerstrom detektiert wird. Dieser kann nur detektiert werden, wenn die elektrische Kopplung, wie sie durch das Schaltelement bewirkt ist, aufgehoben ist. Fließt dann dennoch ein Strom beispielsweise über eine fehlerhafte Isolierung ab, so kann dies als Fehlerstrom detektiert werden, da sich eine Differenz der Stromstärken zwischen den Versorgungsleitungen des Kabels ergibt. Durch Messen der Stromstärke in beiden Versorgungsleitungen des Kabels, an den Polen des Energiespeichers, kann somit eine fehlerhafte Isolation oder ein Isolationswiderstand des Kabels detektiert werden, wenn die Differenz der Stromstärken größer als ein Schwellwert ist. Über den Signaleingang hat nun das Steuergerät für die Prüfroutine Kontrolle über die elektrische Kopplung, wie sie durch das Schaltelement bewirkt ist. Zusätzlich oder alternativ kann an dem Energiespeicher ein Belastungstest durchgeführt werden, bei dem an den Energiespeicher an vorbestimmter Lastwiderstand zugeschaltet wird, um einen Stromfluss zu erzeugen.

In einer Ausführungsform wird während des Belastungstests der besagte elektrische Strom des Energiespeichers über den zwischen die Pole des Energiespeichers geschalteten Lastwiderstand geführt wird und dabei das Schaltelement mittels des Schaltsignals elektrisch sperrend geschaltet gehalten wird und eine jeweilige elektrische Spannung beider Pole des Energiespeichers (14) bezüglich des Massepotentials des Kabels auf einen positiven Wert eingestellt wird, indem einer der Pole oder eine der Versorgungsleitungen mit einer Ladeschaltung der Steuergeräteschaltung verbunden wird. Dann ist es in vorteilhafter Weise möglich, die Spannung zwischen den Polen auch mit einem solchen Spannungsmesseingängen eines Mikrocontrollers zu messen, der ausschließlich positive Spannung messen kann (z.B. mit einem Analog-Digital-Wandler). Der Mikrocontroller kann dabei das Massepotential als Masse nutzen.

In einer Ausführungsform weist die jeweilige Messschaltung jeweils eine Reihenschaltung aus einer Zener-Diode und einem Widerstandselement auf. Über diese Reihenschaltung ist der jeweilige Pol mit dem Massepotential verbunden. Durch diese Reihenschaltung fließt nur Strom, wenn die Durchbruchsspannung der Zener-Diode überschritten ist. Durch die Durchbruchsspannung der Zener-Diode ist somit der besagte Schwellenwert festgelegt, der durch die Spannung zwischen Pol und Massepotential überschritten sein muss, damit die Steuerschaltung das Schaltelement elektrisch sperrend schaltet. Die beschriebene Reihenschaltung aus Zener-Diode und Widerstandselement hat sich in Bezug auf die Reaktionszeit beim Schalten des Schaltelements als besonders vorteilhaft erwiesen.

In einer Ausführungsform ist in der Reihenschaltung die Zener-Diode polseitig (also zur Seite des Pols des elektrischen Energiespeichers hin) und das Widerstandselement massepotentialseitig (also zum Massepotential hin) angeordnet. Somit weist also die elektrische Verbindungsstelle zwischen Zener-Diode und Widerstandselement das Massepotential auf, wenn die Spannung zwischen Pol und Massepotential kleiner als der Schwellenwert ist. Kommt es dann zum Durchbruch an der Zener-Diode, weil die elektrische Spannung größer als der Schwellenwert ist, so steigt auch an der Verbindungsstelle die Spannung an. Somit kann ein Abgriff an der Verbindungsstelle dazu genutzt werden, ein Schaltsignal zu erzeugen.

In einer Ausführungsform weist jede Messschaltung zwischen dem jeweiligen Pol (mit dem sie verbunden ist) und dem Massepotential einen Widerstandswert von mehr als 1 Kiloohm auf, insbesondere mehr als 5 Kiloohm. Hierdurch ergibt sich der Vorteil, dass durch die Messschaltung selbst nur ein geringer Messstrom zwischen dem Stromkreis für die Notversorgung und dem Bordnetz verursacht wird.

In einer Ausführungsform ist das besagte Schaltelement ein N-Kanal-MOSFET, dessen Source-Elektrode mit dem Massepotential verbunden ist. Die Steuerschaltung, die dieses Schaltelement steuert, stellt eine Verbindung einer Gate-Elektrode des N-Kanal-MOSFET mit einer Plusspannung des Steuergeräts über einen Pull-up-Widerstand bereit. Es kann auch die Plusspannung des Energiespeichers zu der Gate-Elektrode über einen Pull-up-Widerstand geführt werden. Durch diese Schaltungsanordnung schaltet das Schaltelement in den elektrisch leitenden Zustand, wenn die Plusspannung anliegt. Somit ist kein aktiver Schaltvorgang notwendig. Um nun ein schnelles Abschalten zu ermöglichen, also das Schaltelement in den elektrisch sperrenden Zustand zu schalten, ist die jeweilige Messschaltung mit einem Steuereingang eines jeweiligen Schalttransistors verbunden, welcher die Gate-Elektrode mit dem Massepotential verbindet. Während also die Gate-Elektrode über einen Pull-up-Widerstand mit einer Plusspannung verbunden ist, gibt es eine weitere Verschaltung der Gate-Elektrode mit dem Massepotential. Diese Verschaltung ist aber elektrisch sperrend durch den Schalttransistor geschaltet. Am Steuereingang dieses Schalttransistors (also dessen Gate oder Basis) kann die Messschaltung ihr Messsignal erzeugen, sodass die Messschaltung direkt den Schalttransistor elektrisch leitend schalten kann. Als Schalttransistor kann beispielsweise ein MPN-Bipolartransistor verwendet werden. Wird der Schalttransistor elektrisch leitend geschaltet, so wird das Potential der Gate-Elektrode auf das Massepotential gesenkt, wodurch das Schaltelement elektrisch sperrend schaltet. Somit kann jede Messschaltung über ihren eigenen Schalttransistor das Schaltelement direkt elektrisch sperrend schalten.

In einer Ausführungsform verbindet zumindest ein weiterer Schalttransistor die beschriebene Gate-Elektrode mit dem Massepotential. Somit kann also unabhängig von den Messschaltungen auch über den jeweiligen weiteren Schalttransistor das Schaltelement elektrisch sperrend geschaltet sein. Beispielsweise kann der besagte Signaleingang, über welchen ein Mikrocontroller das Schaltelement steuern können soll, mit dem Steuereingang eines solchen weiteren Schalttransistors verbunden sein. Wird das Schaltsignal am Signaleingang erzeugt, kann damit der weitere Schalttransistor elektrisch leitend geschaltet werden und damit das Schaltelement elektrisch sperrend geschaltet werden.

Wie bereits beschrieben, kann pro Pol (Pluspol und Minuspol) des elektrischen Energiespeichers jeweils eine Messschaltung vorgesehen sein. Das bedeutet, dass der Pluspol über eine Messschaltung mit dem Massepotential und/oder der Minuspol über eine Messschaltung mit dem Massepotential jeweils verbunden sein können. In einer Ausführungsform ist für beide Pole jeweils eine Messschaltung vorgesehen. Die Messschaltung, die mit demselben Pol verschaltet ist, der auch über das Schaltelement mit dem Massepotential verschaltet ist, kann eigentlich keine Spannung aufbauen, die den Schwellenwert überschreiten könnte, da das Schaltelement eine elektrische Kopplung zum Massepotential bereitstellt. Kommt es allerdings zu einem Kurzschluss mit einer Plus-Leitung des Bordnetzes, kann der dann über diesen Pol und das Schaltelement fließende Strom derart groß werden, dass die über dem Schaltelement abfallende elektrische Spannung den Schwellenwert überschreitet. Dies kann dann mit der Messschaltung detektiert und das Schaltelement ebenfalls elektrisch sperrend geschaltet werden.

Sind zwei Messschaltungen vorgesehen, jeweils eine pro Pol, so sieht eine Ausführungsform vor, dass die Messschaltungen voneinander verschiedene Widerstandswerte zwischen dem jeweiligen Pol und dem Massepotential bereitstellen. Da jeder Pol ein unterschiedliches Potential aufweist (da die beiden Pole ja über den elektrischen Energiespeicher um die elektrische Versorgungsspannung des Energiespeichers versetzt zueinander sind, kann durch die unterschiedlichen Widerstandswerte der Massepotentiale erreicht werden, dass die resultierenden Messsignale auf gleichem Pegel liegen. Damit ist unabhängig davon, mit welchem Pol die jeweilige Messschaltung verbunden ist, in der Steuerschaltung für das Schaltelement keine gesonderte Anpassung notwendig, um das jeweilige Messsignal der Messschaltungen verarbeiten zu können.

Das Kabel, welches den elektrischen Energiespeicher mit dem Steuergerät verbindet, kann in der bekannten Weise Versorgungsleitungen (Adern) aufweisen, die je einen Pol des Energiespeichers mit dem Steuergerät verbinden. Jeder Pol ist also über eine eigene Versorgungsleitung des Kabels mit dem Steuergerät verbunden. In einer Ausführungsform ist durch das Kabel für einen oder beide der Pole jeweils zusätzlich eine jeweilige Messleitung zum Verbinden des Pols mit dem Steuergerät unter Umgehung der Versorgungsleitungen bereitgestellt. Das Kabel hat also drei oder mehr als drei Leitungen. Zwei dieser Leitungen sind Versorgungsleitungen, über welche der eigentliche Laststrom oder die elektrische Leistung zum Versorgen des Steuergeräts übertragen wird. Es bleibt dann eine oder mehr als eine Messleitung übrig, und das Steuergerät ist dazu eingerichtet, eine elektrische Spannung des jeweiligen Pols, zu welchem die Messleitung führt, und/oder eines Thermistors, der an dem Energiespeicher für eine Temperaturmessung bereitgestellt sein kann, über die zumindest eine Messleitung zu erfassen. Hierdurch ist sichergestellt, dass ein Stromfluss durch die Versorgungsleitungen und der damit einhergehende Spannungsabfall über den Versorgungsleitungen das Messergebnis an dem Pol nicht verfälscht.

Wie bereits ausgeführt, ist ein Steuergerät mit einer Notversorgung insbesondere dann sinnvoll, wenn als Fahrzeugfunktion durch das Steuergerät eine E-Call-Notruffunktion bereitgestellt ist. Dies ist daher in einer Ausführungsform der Erfindung als Fahrzeugfunktion explizit vorgesehen.

Die Erfindung umfasst auch ein Kraftfahrzeug, in welchem eine Ausführungsform der beschriebenen Steuergeräteschaltung bereitgestellt ist. In dem Kraftfahrzeug kann somit in vorteilhafter Weise die Steuergeräteschaltung selbst dann betrieben werden, wenn es zwischen einem Pol des elektrischen Energiespeichers der Steuergeräteschaltung und dem Bordnetz des Kraftfahrzeugs zu einem elektrischen Kurzschluss kommt, also eine elektrische Verbindung zwischen diesen entsteht (beispielsweise durch einen Steckerfehler oder eine Defektisolierung). Ist an diesem Pol oder für diesen Pol die besagte Messschaltung zum Überwachen der Spannung zwischen dem Pol und dem Massepotential des Kraftfahrzeugs bereitgestellt, so kann das Schaltelement elektrisch sperrend geschaltet werden, wenn es zu dem Kurzschluss kommt. Dann kann der Stromkreis für die Notversorgung weiterbetrieben werden.

Der Betrieb der erfindungsgemäßen Steuergeräteschaltung ergibt ein Verfahren, das ebenfalls Bestandteil der Erfindung ist. Bei dem Verfahren zum Betreiben einer Steuergeräteschaltung wird ein Steuergerät zum Bereitstellen einer Fahrzeugfunktion sowie außerhalb eines Gehäuses des Steuergeräts einen elektrischen Energiespeicher für eine Notversorgung des Steuergeräts vorsieht, wobei der Energiespeicher das Steuergerät mit elektrischer Energie versorgt, falls ein Versorgungstrom aus einem Bordnetz des Kraftfahrzeugs ausbleibt, wobei zwei elektrische Pole des Energiespeichers über ein Kabel mit dem Steuergerät verschaltet sind und einer der beiden elektrischen Pole über ein Schaltelement mit einem Massepotential des Bordnetzes verschaltet ist und zumindest eine Messschaltung jeweils einen der Pole mit dem Massepotential koppelt und ein Messsignal erzeugt, das mit einer elektrischen Spannung korreliert ist, die zwischen dem jeweiligen Pol und dem Massepotential abfällt, und eine Steuerschaltung des Schaltelements das Schaltelement in einem Normalbetrieb des Steuergeräts elektrisch leitend geschaltet hält und zumindest für den Fall, dass durch das jeweilige Messsignal der zumindest einen Messschaltung signalisiert wird, dass die jeweilige Spannung größer als ein vorbestimmter Schwellenwert ist, das Schaltelement elektrisch sperrend schaltet und damit eine elektrische Kopplung zum Massepotential unterbricht.

Die Erfindung umfasst auch Ausführungsformen des erfindungsgemäßen Verfahrens, die Merkmale aufweisen, wie sie bereits im Zusammenhang mit den Weiterbildungen der erfindungsgemäßen Steuergeräteschaltung beschrieben worden sind. Aus diesem Grund sind die entsprechenden Ausführungsformen des erfindungsgemäßen Verfahrens hier nicht noch einmal beschrieben.

Die Erfindung umfasst auch die Kombinationen der Merkmale der beschriebenen Ausführungsformen.

Im Folgenden Ausführungsbeispiele der Erfindung beschrieben. Hierzu zeigt:
Fig. 1 eine schematische Darstellung einer Ausführungsform der erfindungsgemäßen Steuergeräteschaltung;
Fig. 2 einen schematischen Schaltplan zur Realisierung der erfindungsgemäßen Steuergeräteschaltung; und
Fig. 3 einen schematisierten Schaltplan einer alternativen Ausgestaltung der erfindungsgemäßen Steuergeräteschaltung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

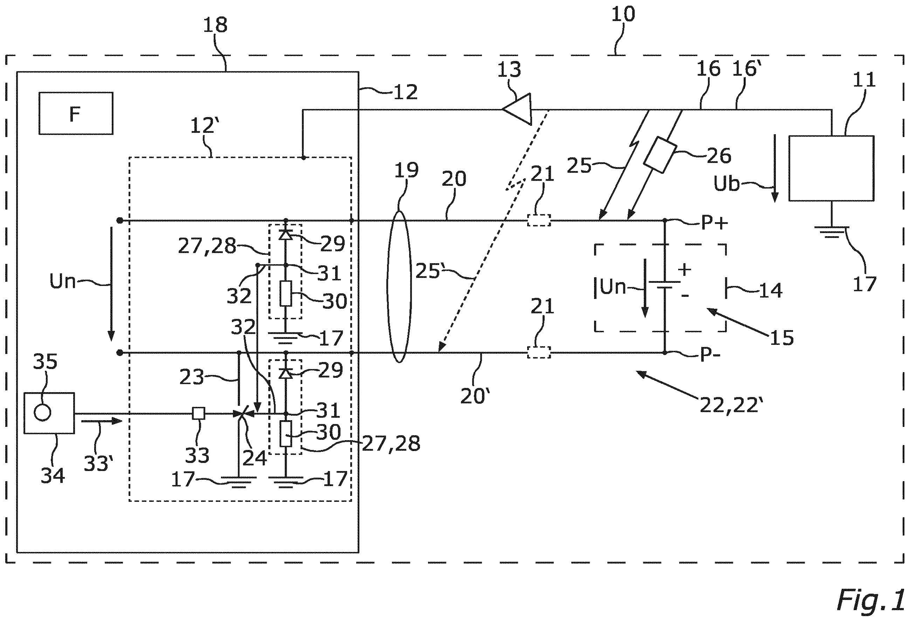

Fig. 1 zeigt ein Kraftfahrzeug 10, bei dem es sich um einen Kraftwagen, insbesondere einen Personenkraftwagen oder Lastkraftwagen, handeln kann. In dem Kraftfahrzeug 10 kann ein elektrisches Bordnetz 11 bereitgestellt sein, an welches ein Steuergerät 12 angeschlossen sein kann. Bei dem Steuergerät 12 kann es sich beispielsweise um ein E-Call-Steuergerät handeln. Für den Fall, dass ein Versorgungsstrom 13 aus dem Bordnetz 11 ausfällt, kann für das Steuergerät 12 ein zusätzlicher elektrischer Energiespeicher 14 vorgesehen sein, der beispielsweise eine Lithium-Ionen-Batterie 15 aufweisen kann. Der Energiespeicher 14 ermöglicht eine Notversorgung des Steuergeräts 12 und stellt damit eine Backup-Batterie (BUB) dar.

In der Fig. 1 ist der durch das Bordnetz 11 gebildete Stromkreis 16 durch eine Plus-Leitung 16' und ein Massepotential 17 dargestellt. Das Massepotential 17 kann beispielsweise in an sich bekannter Weise durch die tragende metallische Struktur des Kraftfahrzeugs 10 bereitgestellt sein. Der Energiespeicher 14 für die Notversorgung des Steuergeräts 12 kann mit dem Steuergerät 12 verschaltet sein, indem der Energiespeicher 14 einerseits außerhalb eines Gehäuses 18 des Steuergeräts 12 angeordnet ist und mit dem Steuergerät 12 über ein Kabel 19 verbunden ist. Durch das Kabel 19 sind Versorgungsleitungen 20, 20' bereitgestellt, wobei beispielsweise die Versorgungsleitung 20 eine Plus-Leitung und die Versorgungsleitung 20' eine Minus-Leitung darstellen kann. In Fig. 1 ist der jeweilige Widerstandswert des Leitungswiderstands 21 der Versorgungsleitungen 20, 20' symbolisch durch ein Widerstandselement repräsentiert. Der Energiespeicher 14 kann an elektrischen Polen P+, P- ein jeweils ein elektrisches Potential bereitstellen, wodurch sich als Potentialdifferenz eine Notversorgungsspannung Un zwischen den Polen P+, P- ergibt. Durch den Energiespeicher 14 sind die zwei Pole P+, P- bereitgestellt, zwischen denen die elektrische Notversorgungsspannung Un durch den Energiespeicher 14 erzeugt wird. Mit diesen Polen P+, P- ist das Steuergerät 12 über das Kabel 19 verbunden, damit die Notversorgungsspannung Un im Gehäuse 18 des Steuergeräts 12 verfügbar ist.

Das Steuergerät 12, der Energiespeicher 14 und das Kabel 19 bilden damit insgesamt einen Stromkreis 22, über welchen das Steuergerät 12 auch bei Ausbleiben des Versorgungsstroms 13 noch mit elektrischer Energie aus dem Energiespeicher 14 versorgt werden und damit weiterbetrieben werden kann. Dies kann im Falle einer E-Call-Notruffunktion beispielsweise nach einem Crash des Kraftfahrzeugs 10 relevant sein. Der Stromkreis 22 stellt insgesamt eine Steuergeräteschaltung 22' dar.

Für einen Normalbetrieb kann durch das Bordnetz 11 eine Bordnetzspannung Ub bereitgestellt sein. Die Bordnetzspannung Ub kann größer als die Notversorgungsspannung Un sein. Beispielsweise kann es sich bei der Bordnetzspannung Ub um einen Nennspannungswert von 12 Volt und bei der Notversorgungsspannung Un einen Nennwert von kleiner als 6 Volt, beispielsweise 4 Volt, handeln.

Für einen Potentialangleich zwischen dem Massepotential 17 des Bordnetzes 11 und der Versorgungsleitung 20' (Minus-Leitung) kann eine elektrische Kopplung 23 vorgesehen sein, über welche die Versorgungsleitung 20' mit dem Massepotential 17 verbunden sein kann, um das Massepotential 17 und das Potential der Versorgungsleitung 20' anzugleichen. Die elektrische Kopplung 23 kann schaltbar ausgestaltet sein, indem sie über ein Schaltelement 24 geführt ist, bei dem es sich beispielsweise um einen Transistor handeln kann, insbesondere einen Halbleiterleistungsschalter, wie beispielsweise einen MOSFET, wie z.B. einen N-Kanal-MOSFET.

Mittels des Schaltelements 24 kann ein Schutz für den Stromkreis 22 bereitgestellt sein, um eine Überspannung und/oder einen Ladestrom am Energiespeicher zu vermeiden, falls es zu einer elektrischen Verbindung oder einem elektrischen Kurzschluss 25 zwischen der Plus-Leitung 16 und einem der Pole P+, P- kommt.

Eine solche elektrische Verbindung oder ein Kurzschluss 25` kann auch zwischen der Plus-Leitung 16' und der negativen Versorgungsleitung 20' vorliegen. Ein solche Kurzschluss 25, 25` kann beispielsweise durch eine Beschädigung der Isolierung des Kabels 19 und/oder durch einen Fehler in einem Stecker des Kabels 19 verursacht werden. Alternativ zu einem Kurzschluss 25, 25` kann es zwischen der Plus-Leitung 16' und einer der Versorgungsleitungen 20, 20' auch einen Kriechstrom über einen Leckwiderstand 26 geben, der ebenfalls eine elektrische Verbindung des Stromkreises 22 zu der Plus-Leitung 16' verursacht.

Kommt es zu dem Kurzschluss 25 oder dem Kriechstrom des Leckwiderstands 26, so fällt die Bordnetzspannung Ub über diese elektrische Verbindung und die Kopplung 23 über den Energiespeicher 14 ab, der somit mit einer größeren elektrischen Spannung beaufschlagt wird als es gemäß der Notversorgungsspannung Un vorgesehen ist. Dies kann zu einer Beschädigung des Energiespeichers 14 führen. Kommt es zu dem Kurzschluss 25`, so fällt die Bordnetzspannung Ub über dem Schaltelement 24 ab und das Bordnetz 11 ist bis auf den Widerstand des Schaltelements 24 und den Leitungswiderstand 21 kurzgeschlossen.

Um diese Fehlerfälle zu berücksichtigen, kann bei dem Kraftfahrzeug 10 vorgesehen sein, dass zumindest einer der Pole P+, P- oder beide der Pole P+, P-jeweils über eine Messschaltung 27 mit dem Massepotential 17 verbunden ist. Die Messschaltung 27 kann hierbei direkt an den jeweiligen Pol P+, P- oder in dem Kabel 19 oder, wie in Fig. 1 dargestellt, in dem Steuergerät 12 bereitgestellt sein. Diese Variante ist möglich, da die Leitungswiderstände 21 ausreichend gering sind.

Die Messschaltung 27 kann beispielsweise als eine Reihenschaltung 28 ausgestaltet sein, in welcher eine Zener-Diode 29 und ein Widerstandselement 30 in Reihe zwischen dem jeweiligen Pol P+, P- und das Massepotential 17 geschaltet sind. An einer Verbindungsstelle 31 kann ein Messsignal 32 abgegriffen werden, welches signalisiert, ob die jeweilige Spannung zwischen dem Pol P+, P- einerseits und dem Massepotential 17 andererseits größer als eine Durchbruchsspannung der Zener-Diode 29 ist. Ist dies der Fall, so ergibt sich ein Schaltvorgang an dem Schaltelement 24. Im Normalbetrieb, wenn die besagte gemessene Spannung kleiner als die Durchbruchsspannung der Zener-Diode 29 ist, wird hierbei das Schaltelement 24 elektrisch leitend geschaltet, sodass die Kopplung 23 besteht. Überschreitet die Spannung die Durchbruchsspannung der jeweiligen Zener-Diode 29, so wird das Schaltelement 24 elektrisch sperrend geschaltet, wodurch die Kopplung 23 aufgehoben oder unterbrochen ist. Selbst bei einem einzelnen Kurzschluss 25, 25' oder dem Kriechstrom kann dann dennoch durch das Steuergerät 12 der Energiespeicher 14 für einen weiteren Betrieb oder eine Notversorgung genutzt werden. Somit ist ein solcher Einzelfehler betreffend einen Kurzschluss 25 oder 25' oder Kriechstrom damit kompensiert.

In Fig. 1 ist die beschriebene Schaltlogik nur symbolisch durch eine Steuerschaltung 12' repräsentiert. Die Steuerschaltung 12' kann zusätzlich noch einen Signaleingang 33 bereitstellen, durch welchen das Schaltelement 24 auch beispielsweise durch einen Mikrocontroller 34 mittels eines Schaltsignals 33' geschaltet werden kann, der für das Durchführen eines Isolationstests oder allgemein einer Prüfroutine 35 bereitgestellt sein kann. Somit wird durch das Vorsehen des Schaltelements 24 ein Selbsttest in dem Steuergerät 12 nicht verhindert.

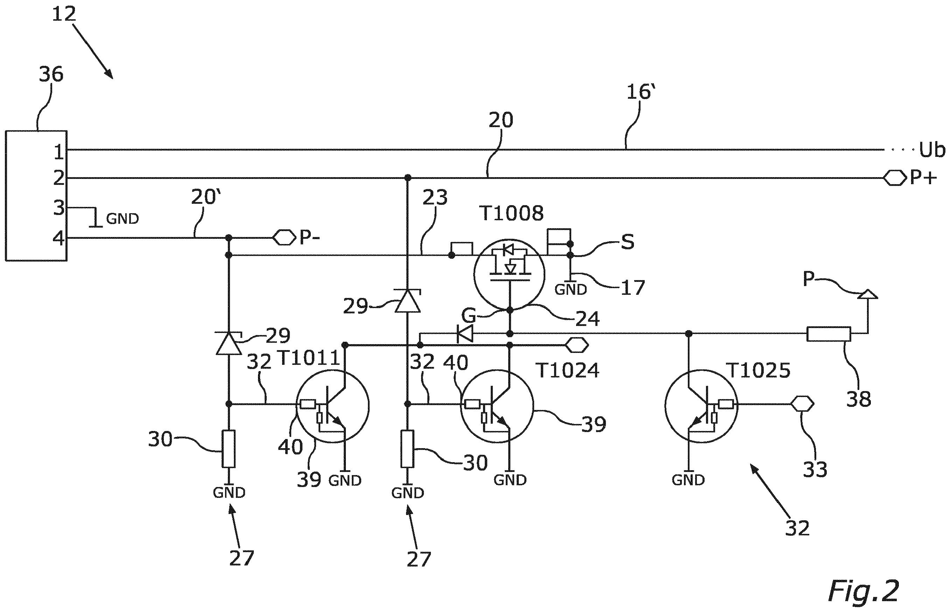

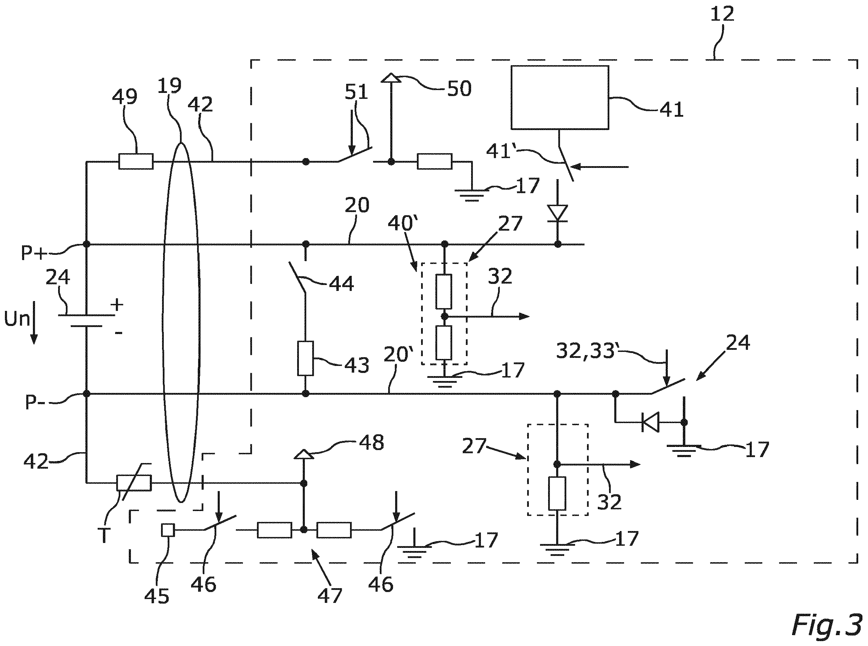

Fig. 2 und Fig. 3 zeigen mögliche Implementierungen der Steuerschaltung 12'.

Gemäß Fig. 2 ist das Schaltelement 24 ein Leistungshalbleiterschalter in Form eines MOSFET, dessen Source-Elektrode S mit dem Massepotential 17 verbunden ist und dessen Gate-Elektrode D mit einer Plusspannung P verbunden ist, bei der es sich beispielsweise um die Bordnetzspannung Ub handeln kann. Durch das Steuergerät 12 kann an Eingangsanschlüssen die Bordnetzspannung Ub, die Spannung des Pols P+, das Massepotential 17 (repräsentiert als Ground GND) und das Potential des Pols P- empfangen werden. Von dem Steuergerät 12 ist in Fig. 2 in diesem Zusammenhang ein Stecker 36 für das Kabel 19 dargestellt. Im Stecker 32 können elektrische Kontaktstifte oder Pins 1, 2, 3, 4 mit folgender Belegung bereitgestellt sein: 1 Klemme 30 (Plus-Leitung des Bordnetzes 11),
3 GND Fahrzeugmasse (Massepotential 17),
2 Pol P+ des Energiespeichers,
4 Pol P- des Energiespeicers.

Gemäß der Steuerschaltung 12' wird ein Potential des Gates G über einen Pull-up-Widerstand 38 zu der Plusspannung P gezogen, sodass das Schaltelement 24 elektrisch leitend gehalten wird. Die Steuerschaltung kann für jede Versorgungsleitung 20, 20' einen Schalttransistor 39 bereitstellen, die hier durch die Bezeichnung T1011 und T1024 unterschieden sind. Jeder Schalttransistor 39 kann über einen Steuereingang 40 jeweils eines der Messsignale 32 aus den Messschaltungen 27 empfangen, sodass die Schalttransistoren 39 in Abhängigkeit von dem jeweiligen Messsignal 32 elektrisch leitend geschaltet werden können. Übersteigt nun die Spannung zwischen einer der Versorgungsleitungen 20, 20' den durch die jeweilige Zener-Diode 29 vorgegebenen Schwellenwert, so wird der zugehörige Schalttransistor 39 elektrisch leitend geschaltet und damit das Potential der Gate-Elektrode G des Schaltelements 24 zu dem Massepotential 17 gezogen, wodurch das Schaltelement 24 elektrisch sperrend schaltet. Diese Lösung ist derart schaltschnell, dass bei Entstehen eines Kurzschlusses 25, 25' oder eines Leckstroms (Kriechstroms) die elektrische Kopplung 23 unterbrochen wird, bevor ein Schaden an dem Energiespeicher 14, dem Kabel 19 oder dem Steuergerät 12 entstehen kann.

In Fig. 3 ist veranschaulicht, wie eine Messschaltung 27 auch als Spannungsteiler 40' realisiert werden kann. Fig. 3 veranschaulicht zudem, dass die Messschaltungen 27 insgesamt unterschiedliche Widerstandswerte aufweisen können, sodass trotz unterschiedlicher Potentiale der Pole P+, P- ein Pegel der Messsignale 32 gleichgehalten werden kann. Fig. 3 zeigt, wie hierzu einmal eines und einmal mehrere Widerstandselemente genutzt werden können. Zudem ist veranschaulicht, wie eine Ladeschaltung 41 über einen Schalter 41' zugeschaltet werden kann, um den Energiespeicher 14 mit elektrischer Energie nachzuladen.

Das Kabel 19 kann zusätzlich zu den Versorgungsleitungen 20, 20' zumindest eine Messleitung 42 aufweisen, über welche an dem jeweiligen Pol P+, P- von dem Steuergerät 12 aus eine Spannungsmessung vorgesehen sein kann, wobei eine Stromstärke in den Messleitungen 42 kleiner gehalten werden kann als in den Versorgungsleitungen 20, 20`. Hierdurch kann beispielsweise ein Lasttest oder Belastungstest über einen Lastwiderstand 43 und einen Schalter 44 an dem Energiespeicher 14 durchgeführt werden und währenddessen die durch den Energiespeicher 14 bereitgestellte Notversorgungsspannung Un gemessen werden und hierzu die Messleitungen 42 genutzt werden.

Über eine Messleitung 42 kann auch ein Spannungsabfall an einem Thermistor T gemessen werden, der mit dem Energiespeicher 14 mechanisch verbunden sein kann, um hierdurch eine Temperatur des Energiespeichers erfassen zu können. Dazu kann durch eine Schaltung für eine Spannungsquelle 45 (wie sie an sich bekannt ist) eine Prüfspannung erzeugt werden, die mithilfe von Schaltelementen 46 zuschaltbaren Spannungsteiler 47 zugeschaltet werden kann, sodass sich bei bekannten Widerstandswerten ein Temperatursignal 48 ergibt.

Welcher Typ von Energiespeicher 14 aktuell in dem Kraftfahrzeug 10 verbaut ist, kann mittels eines Codierwiderstands 49 angegeben sein, der durch Anlegen einer Testspannung 50, die mittels einer an sich bekannten Schaltung für eine Spannungsquelle realisiert sein kann, und die mittels eines Schaltelements 51 auf den Codierwiderstand 49 zugeschaltet werden kann, ausgelesen oder geprüft werden kann.

Im Folgenden sind noch einmal Aspekte der Erfindung in einer besonders bevorzugten Ausführungsform zusammengefasst.

Der negative Anschluss (oder beide Anschlüsse) der Backup-Batterie (Energiespeicher 14) an das Steuergerät 12 wird durch einen Schalter (Schaltelement 24, insbesondere FET) von der Gerätemasse getrennt, wenn auf der positiven oder negativen Backup-Batterie-Zuleitung oder Versorgungsleitung 20, 20' eine positive Überspannung (KL3O) bzw. zu hoher Leckstrom (über Übergangswiderstände nach KL30) eingespeist wird. Durch ein Schaltsignal 33` (BATF_OFF) kann zusätzlich die Masseleitung per Software getrennt werden, um eine zyklische Kontrolle eines Masse-Fehlerstromes zu ermöglichen.

Damit ergibt sich ein Backup-Batterie-Schutz gegen Überspannung und Leckströme an beiden Versorgungsleitungen. Es ist keine zusätzliche Elektronik in Backup-Batterie-Modul notwendig. Eine hohe Backup-Batterie-Messgenauigkeit durch 3 oder 4-Leitertechnik zur Backup-Batterie-Spannungsmessung durch Ausgleich des Leitungswiderstandes ist ebenfalls möglich. Dies stellt eine kostengünstigere Lösung gegenüber "intelligente Backup-Batterie" dar.

Einsetzbar ist dies in der KFZ-Elektronik für die unterbrechungsfreie Stromversorgung, z.B. bei einem Solar-Akkumulator.

In dem Schaltbild von Fig. 2 ist die Backup-Batterie-Schutzelektronik über BATT_P (Pin2) und BATT_N (Pin4) mit der Backup-Batterie P+ und P- Pol verbunden. Die Gate-Schaltspannung wird durch Ub (+10V) von der Steuergeräte-Spannungsversorgung erzeugt. FET T1008 schaltet BATT_N gegen GND, Fehlspannung an BATT_N >5V oder BATT_P >7V schaltet den Kollektor der Transistoren T1011 bzw. T1024 gegen GND und damit die Gatespannung des T1008 auf OV. Der FET T1008 öffnet und die Masseverbindung der Backup-Batterie wird aufgetrennt.

Fig. 3 zeigt eine Backup-Batterie-Schutzschaltung mit Temperaurmessung und Codecheck. Die Schutzschaltung erlaubt ein GND-Auftrennung per Software (BATT_N_OFF am Signaleingang 33). Damit sind auch komplexere Messungen der Backup-Batterie (Health Test/ Belastungstest, Ladespannung) 3- oder 4-Leiter-Messung der Backup-Batterie-Spannung zwischen P+ und P- ist möglich, ein vorhandener Codierungswiderstand (Erkennung des Akku-Typen) und Temperaturfühler mit Thermistor T kann über dieselben Messleitungen abgelesen werden, was kostengünstig umsetzbar ist.

Insgesamt zeigt das Beispiel, wie durch die Erfindung in Überspannungsschutz für eine Backup-Batterie bereitgestellt werden kann.

## Patentansprüche

1. Steuergeräteschaltung (22) für ein Kraftfahrzeug (10), wobei die Steuergeräteschaltung (22) ein Steuergerät (12) zum Bereitstellen einer Fahrzeugfunktion (F) sowie außerhalb eines Gehäuses (18) des Steuergeräts (12) einen elektrischen Energiespeicher (14) für eine Notversorgung des Steuergeräts (12) aufweist, wobei der Energiespeicher (14) dazu eingerichtet ist, das Steuergerät (12) mit elektrischer Energie zu versorgen, falls ein Versorgungstrom (13) aus einem Bordnetz (11) des Kraftfahrzeugs (10) ausbleibt, wobei
zum Bilden eines Stromkreises (22') für die Notversorgung zwei elektrische Pole (P+, P-) des Energiespeichers (14) über ein Kabel (19) mit dem Steuergerät (12) verschaltet sind und in dem Steuergerät (12) oder in dem Energiespeicher (14) oder an dem Kabel (19) einer der beiden elektrischen Pole (P+, P-) über ein Schaltelement (24) mit einem Massepotential (17) des Bordnetzes (11) verschaltet ist und
zumindest eine Messschaltung (27) jeweils einen der Pole (P+, P-) mit dem Massepotential (17) koppelt und dazu eingerichtet ist, ein Messsignal (32) zu erzeugen, das mit einer elektrischen Spannung korreliert ist, die zwischen dem jeweiligen Pol (P+, P-) und dem Massepotential (17) abfällt, und
eine Steuerschaltung (12') des Schaltelements (24) dazu eingerichtet ist, das Schaltelement (24) in einem Normalbetrieb des Steuergeräts (12) elektrisch leitend geschaltet zu halten und zumindest für den Fall, dass durch das jeweilige Messsignal (32) der zumindest einen Messschaltung (27) signalisiert ist, dass die jeweilige Spannung größer als ein vorbestimmter Schwellenwert ist, das Schaltelement (24) elektrisch sperrend zu schalten und damit eine durch das elektrische Schaltelement (24) bewirkte elektrische Kopplung (23) zwischen dem Stromkreis (22) und Massepotential (17) aufzuheben.

2. Steuergeräteschaltung (22) nach Anspruch 1, wobei die Steuerschaltung (12') einen Signaleingang (33) zum Empfangen eines Schaltsignals (33') aufweist und dazu eingerichtet ist, das Schaltelement (24) in Abhängigkeit von dem Schaltsignal (33') elektrisch sperrend zu schalten.

3. Steuergeräteschaltung (22) nach Anspruch 2, wobei das Steuergerät (12) dazu eingerichtet ist, eine Prüfroutine zum Überprüfen eines Isolationswiderstands des Kabels (19) und/oder einen Belastungstest für den Energiespeicher (14) durchzuführen und zu Beginn der Prüfroutine und/oder des Belastungstests das Schaltsignal (33') an dem Signaleingang (33) zu erzeugen.

4. Steuergeräteschaltung (22) nach Anspruch 3, wobei während des Belastungstests ein elektrischer Strom des Energiespeichers (14) über einen zwischen die Pole (P+, P-) des Energiespeichers (14) geschalteten Lastwiderstand (43) geführt wird und dabei das Schaltelement (24) mittels des Schaltsignals (33') elektrisch sperrend geschaltet gehalten wird und eine jeweilige elektrische Spannung beider Pole (P+, P-) des Energiespeichers (14) bezüglich des Massepotentials (17) des Kabels (19) auf einen positiven Wert eingestellt wird, indem einer der Pole (P+, P-) oder eine Versorgungsleitung (20, 20') des Kabels (19) mit einer Ladeschaltung (41) der Steuergeräteschaltung (22) verbunden wird.

5. Steuergeräteschaltung (22) nach einem der vorhergehenden Ansprüche, wobei die zumindest eine Messschaltung (27) jeweils eine Reihenschaltung (28) aus einer Zener-Diode (29) und einem Widerstandselement (30) aufweist, über welche der jeweilige Pol (P+, P-) mit dem Massepotential (17) verbunden ist, wobei durch eine Durchbruchspannung der Zener-Diode (29) der Schwellenwert festgelegt ist.

6. Steuergeräteschaltung (22) nach Anspruch 5, wobei in der Reihenschaltung (28) die Zener-Diode (29) polseitig und das Widerstandselement (30) massepotentialseitig angeordnet ist.

7. Steuergeräteschaltung (22) nach einem der vorhergehenden Ansprüche, wobei jede Messschaltung (27) zwischen dem jeweiligen Pol (P+, P-) und dem Massepotential (17) einen Widerstandswert von mehr als 1 Kiloohm aufweist.

8. Steuergeräteschaltung (22) nach einem der vorhergehenden Ansprüche, wobei das Schaltelement (24) ein N-Kanal-MOSFET ist, dessen Source-Elektrode (S) mit dem Massepotential (17) verbunden ist, und die Steuerschaltung (12') eine Verbindung einer Gate-Elektrode (G) des N-Kanal-MOSFET mit einer Plusspannung (P) des Steuergeräts (12) und/oder des Energiespeichers (14) über einen Pull-up-Widerstand (38) bereitstellt und die jeweilige Messschaltung (27) mit einem Steuereingang (40) eines jeweiligen Schalttransistors (39) verbunden ist, welcher die Gate-Elektrode (G) mit dem Massepotential (17) verbindet.

9. Steuergeräteschaltung (22) nach Anspruch 8, wobei zumindest ein weiterer Schalttransistor (32) die Gate-Elektrode (G) mit dem Massepotential (17) verbindet.

10. Steuergeräteschaltung (22) nach einem der vorhergehenden Ansprüche, wobei für beide Pole (P+, P-) jeweils eine Messschaltung (27) vorgesehen ist.

11. Steuergeräteschaltung (22) nach Anspruch 10, wobei die Messschaltungen (27) voneinander verschiedene Widerstandswerte zwischen dem jeweiligen Pol (P+, P-) und dem Massepotential (17) bereitstellen.

12. Steuergeräteschaltung (22) nach einem der vorhergehenden Ansprüche, wobei das Kabel (19) Versorgungsleitungen (20, 20') aufweist, die je einen der Pole (P+, P-) mit dem Steuergerät (12) verbinden, und durch das Kabel (19) für einen oder beide der Pole (P+, P-) zusätzlich eine jeweilige Messleitung (42) zum Verbinden des Pols (P+, P-) mit dem Steuergerät (12) unter Umgehung der Versorgungsleitungen (20, 20') bereitgestellt ist und das Steuergerät (12) dazu eingerichtet ist, eine elektrische Spannung des Pols (P+, P-) und/oder eines Thermistors (T) an dem Energiespeicher (14) über die zumindest eine Messleitung (42) zu erfassen.

13. Steuergeräteschaltung (22) nach einem der vorhergehenden Ansprüche, wobei das Steuergerät (12) als Fahrzeugfunktion (F) eine E-Call-Notruffunktion bereitstellt.

14. Kraftfahrzeug (10) mit einer Steuergeräteschaltung (22) nach einem der vorhergehenden Ansprüche.

15. Verfahren zum Betreiben einer Steuergeräteschaltung (22), die ein Steuergerät (12) zum Bereitstellen einer Fahrzeugfunktion (F) sowie außerhalb eines Gehäuses (18) des Steuergeräts (12) einen elektrischen Energiespeicher (14) für eine Notversorgung des Steuergeräts (12) vorsieht, wobei der Energiespeicher (14) das Steuergerät (12) mit elektrischer Energie versorgt, falls ein Versorgungstrom (13) aus einem Bordnetz (11) des Kraftfahrzeugs (10) ausbleibt, wobei
zwei elektrische Pole (P+, P-) des Energiespeichers (14) über ein Kabel (19) mit dem Steuergerät (12) verschaltet sind und einer der beiden elektrischen Pole (P+, P-) über ein Schaltelement (24) mit einem Massepotential (17) des Bordnetzes verschaltet ist und
zumindest eine Messschaltung (27) jeweils einen der Pole (P+, P-) mit dem Massepotential (17) koppelt und ein Messsignal (32) erzeugt, das mit einer elektrischen Spannung korreliert ist, die zwischen dem jeweiligen Pol (P+, P-) und dem Massepotential (17) abfällt, und
eine Steuerschaltung (12') des Schaltelements (24) das Schaltelement (24) in einem Normalbetrieb des Steuergeräts (12) elektrisch leitend geschaltet hält und zumindest für den Fall, dass durch das jeweilige Messsignal (32) der zumindest einen Messschaltung (27) signalisiert wird, dass die jeweilige Spannung größer als ein vorbestimmter Schwellenwert ist, das Schaltelement (24) elektrisch sperrend schaltet und damit eine elektrische Kopplung (23) zum Massepotential (17) unterbricht.

## Claims

1. Control unit circuit (22) for a motor vehicle (10), wherein the control unit circuit (22) comprises a control unit (12) for providing a vehicle function (F) and, outside a housing (18) of the control unit (12), an electrical energy store (14) for an emergency supply of the control unit (12), wherein the energy store (14) is set up to supply the control unit (12) with electrical energy if there is no supply current (13) from an on-board electrical system (11) of the motor vehicle (10),
wherein
in order to form a circuit (22') for the emergency supply, two electrical poles (P+, P-) of the energy store (14) are connected to the control unit (12) via a cable (19) and, in the control unit (12) or in the energy store (14) or on the cable (19), one of the two electrical poles (P+, P-) is connected via a switching element (24) to an earth potential (17) of the on-board electrical system (11) and
at least one measurement circuit (27) couples each one of the poles (P+, P-) to the earth potential (17) and is set up to generate a measurement signal (32), which is correlated with a voltage dropped between the respective pole (P+, P-) and the earth potential (17), and
a control circuit (12') of the switching element (24) is set up to keep the switching element (24) in an electrically conductive state in normal operation of the control unit (12) and, at least in the event that the respective measurement signal (32) of the at least one measurement circuit (27) indicates that the respective voltage is greater than a predetermined threshold value, to switch the switching element (24) to an electrically non-conductive state and thus to suppress an electrical coupling (23), brought about by the electrical switching element (24), between the electric circuit (22) and earth potential (17).

2. Control unit circuit (22) according to Claim 1, wherein the control circuit (12') has a signal input (33) for receiving a switching signal (33') and is set up to switch the switching element (24) to an electrically non-conductive state depending on the switching signal (33').

3. Control unit circuit (22) according to Claim 2, wherein the control unit (12) is set up to carry out a test routine for checking an insulation resistance of the cable (19) and/or a load test for the energy store (14) and, at the beginning of the test routine and/or the load test, to generate the switching signal (33') at the signal input (33).

4. Control unit circuit (22) according to Claim 3, wherein, during the load test, an electric current of the energy store (14) is routed via a load resistor (43) connected between the poles (P+, P-) of the energy store (14) and in the process the switching element (24) is kept in the electrically non-conductive state by means of the switching signal (33') and a respective voltage of both poles (P+, P-) of the energy store (14) with respect to the earth potential (17) of the cable (19) is set to a positive value by virtue of one of the poles (P+, P-) or a supply line (20, 20') of the cable (19) being connected to a charging circuit (41) of the control unit circuit (22).

5. Control unit circuit (22) according to one of the preceding claims, wherein the at least one measurement circuit (27) comprises in each case a series circuit (28) composed of a Zener diode (29) and a resistance element (30), via which the respective pole (P+, P-) is connected to the earth potential (17), wherein the threshold value is stipulated by a breakdown voltage of the Zener diode (29).

6. Control unit circuit (22) according to Claim 5, wherein the Zener diode (29) is arranged on the pole side and the resistance element (30) is arranged on the earth potential side in the series circuit (28).

7. Control unit circuit (22) according to one of the preceding claims, wherein each measurement circuit (27) between the respective pole (P+, P-) and the earth potential (17) has a resistance value of more than 1 kiloohm.

8. Control unit circuit (22) according to one of the preceding claims, wherein the switching element (24) is an N-channel MOSFET whose source electrode (S) is connected to the earth potential (17), and the control circuit (12') provides a connection of a gate electrode (G) of the N-channel MOSFET to a positive voltage (P) of the control unit (12) and/or of the energy store (14) via a pull-up resistor (38) and the respective measurement circuit (27) is connected to a control input (40) of a respective switching transistor (39), which connects the gate electrode (G) to the earth potential (17).

9. Control unit circuit (22) according to Claim 8, wherein at least one further switching transistor (32) connects the gate electrode (G) to the earth potential (17).

10. Control unit circuit (22) according to one of the preceding claims, wherein a measurement circuit (27) is provided for each of the two poles (P+, P-).

11. Control unit circuit (22) according to Claim 10, wherein the measurement circuits (27) provide different resistance values between the respective pole (P+, P-) and the earth potential (17).

12. Control unit circuit (22) according to one of the preceding claims, wherein the cable (19) comprises supply lines (20, 20'), which each connect one of the poles (P+, P-) to the control unit (12), and through the cable (19) for one or both of the poles (P+, P-) a respective measurement line (42) is additionally provided for connecting the pole (P+, P-) to the control unit (12) while bypassing the supply lines (20, 20') and the control unit (12) is set up to detect a voltage of the pole (P+, P-) and/or a thermistor (T) on the energy store (14) via the at least one measurement line (42).

13. Control unit circuit (22) according to one of the preceding claims, wherein the control unit (12) provides an e-call emergency call function as the vehicle function (F).

14. Motor vehicle (10) comprising a control unit circuit (22) according to one of the preceding claims.

15. Method for operating a control unit circuit (22), which provides a control unit (12) for providing a vehicle function (F) and, outside a housing (18) of the control unit (12), an electrical energy store (14) for an emergency supply of the control unit (12), wherein the energy store (14) supplies the control unit (12) with electrical energy if there is no supply current (13) from an on-board electrical system (11) of the motor vehicle (10),
wherein
two electrical poles (P+, P-) of the energy store (14) are connected to the control unit (12) via a cable (19) and one of the two electrical poles (P+, P-) is connected via a switching element (24) to an earth potential (17) of the on-board electrical system and
at least one measurement circuit (27) couples each one of the poles (P+, P-) to the earth potential (17) and generates a measurement signal (32), which is correlated with a voltage dropped between the respective pole (P+, P-) and the earth potential (17), and
a control circuit (12') of the switching element (24) keeps the switching element (24) in an electrically conductive state in normal operation of the control unit (12) and, at least in the event that the respective measurement signal (32) of the at least one measurement circuit (27) indicates that the respective voltage is greater than a predetermined threshold value, switches the switching element (24) to an electrically non-conductive state and thus interrupts an electrical coupling (23) to the earth potential (17).

## Revendications

1. Circuit de contrôleur (22) pour un véhicule à moteur (10), le circuit de contrôleur (22) possédant un contrôleur (12) destiné à fournir une fonction de véhicule (F) ainsi qu'un accumulateur d'énergie (14) électrique, à l'extérieur d'un boîtier (18) du contrôleur (12), pour une alimentation de secours du contrôleur (12), l'accumulateur d'énergie (14) étant conçu pour alimenter le contrôleur (12) en énergie électrique dans le cas où un courant d'alimentation (13) en provenance d'un réseau de bord (11) du véhicule à moteur (10) est manquant,
en vue de former un circuit électrique (22') pour l'alimentation de secours, deux pôles électriques (P+, P-) de l'accumulateur d'énergie (14) étant connectés au contrôleur (12) par le biais d'un câble (19) et dans le contrôleur (12) ou dans l'accumulateur d'énergie (14) ou au niveau du câble (19), l'un des deux pôles électriques (P+, P-) étant connecté par le biais d'un élément de commutation (24) à un potentiel de masse (17) du réseau de bord (11) et
au moins un circuit de mesure (27) couplant respectivement l'un des pôles (P+, P-) au potentiel de masse (17) et étant conçu pour générer un signal de mesure (32), lequel est corrélé avec une tension électrique qui chute entre le pôle (P+, P-) respectif et le potentiel de masse (17), et
un circuit de commande (12') de l'élément de commutation (24) étant conçu pour maintenir l'élément de commutation (24) électriquement conducteur dans un régime normal du contrôleur (12) et pour commuter l'élément de commutation (24) électriquement bloquant, au moins dans le cas où le signal de mesure (32) respectif de l'au moins un circuit de mesure (27) signale que la tension respective est supérieure à une valeur de seuil prédéterminée, et ainsi annuler un couplage électrique (23) provoqué par l'élément de commutation (24) électrique entre le circuit électrique (22) et le potentiel de masse (17).

2. Circuit de contrôleur (22) selon la revendication 1, le circuit de commande (12') possédant une entrée de signal (33) servant à la réception d'un signal de commutation (33') et étant conçu pour commuter l'élément de commutation (24) électriquement bloquant en fonction du signal de commutation (33').

3. Circuit de contrôleur (22) selon la revendication 2, le contrôleur (12) étant conçu pour exécuter une routine de contrôle en vue de contrôler une résistance d'isolation du câble (19) et/ou un essai de charge pour l'accumulateur d'énergie (14) et pour générer le signal de commutation (33') à l'entrée de signal (33) au début de la routine de contrôle et/ou de l'essai de charge.

4. Circuit de contrôleur (22) selon la revendication 3, un courant électrique de l'accumulateur d'énergie (14) étant conduit par une résistance de charge (43) branchée entre les pôles (P+, P-) de l'accumulateur d'énergie (14) pendant l'essai de charge, et l'élément de commutation (24) étant ici maintenu à l'état commuté électriquement bloquant au moyen du signal de commutation (33') et une tension électrique respective des deux pôles (P+, P-) de l'accumulateur d'énergie (14) étant réglée à une valeur positive en référence au potentiel de masse (17) du câble (19) en reliant l'un des pôles (P+, P-) ou une ligne d'alimentation (20, 20') du câble (19) à un circuit de charge (41) du circuit de contrôleur (22).

5. Circuit de contrôleur (22) selon l'une des revendications précédentes, l'au moins un circuit de mesure (27) possédant respectivement un circuit série (28) composé d'une diode Zener (29) et d'un élément résistif (30), par le biais duquel le pôle (P+, P-) respectif est relié au potentiel de masse (17), une valeur de seuil étant spécifiée par une tension de claquage de la diode Zener (29).

6. Circuit de contrôleur (22) selon la revendication 5, la diode Zener (29) étant disposée du côté du pôle dans le circuit série (28) et l'élément résistif (30) du côté du potentiel de masse.

7. Circuit de contrôleur (22) selon l'une des revendications précédentes, circuit de mesure (27) présentant une valeur de résistance supérieure à 1 kilohm entre le pôle (P+, P-) respectif et le potentiel de masse (17).

8. Circuit de contrôleur (22) selon l'une des revendications précédentes, l'élément de commutation (24) étant un MOSFET à canal N dont l'électrode de source (S) est reliée au potentiel de masse (17) et le circuit de commande (12') fournissant une liaison d'une électrode de gâchette (G) du MOSFET à canal N avec une tension positive (P) du contrôleur (12) et/ou de l'accumulateur d'énergie (14) par le biais d'une résistance de tirage au niveau haut (38) et le circuit de mesure (27) respectif étant relié à une entrée de commande (40) d'un transistor de commutation (39), lequel relie l'électrode de gâchette (G) au potentiel de masse (17).

9. Circuit de contrôleur (22) selon la revendication 8, au moins un transistor de commutation supplémentaire (32) reliant l'électrode de gâchette (G) au potentiel de masse (17).

10. Circuit de contrôleur (22) selon l'une des revendications précédentes, un circuit de mesure (27) étant respectivement présent pour les deux pôles (P+, P-).

11. Circuit de contrôleur (22) selon la revendication 10, les circuits de mesure (27) fournissant des valeurs de résistances différentes l'une de l'autre entre le pôle (P+, P-) respectif et le potentiel de masse (17).

12. Circuit de contrôleur (22) selon l'une des revendications précédentes, le câble (19) possédant des lignes d'alimentation (20, 20') qui relient chacune l'un des pôles (P+, P-) au contrôleur (12) et une ligne de mesure (42) respective, destinée à relier le pôle (P+, P-) au contrôleur (12) en contournant les lignes d'alimentation (20, 20'), étant en plus fournie par le câble (19) pour l'un des pôles (P+, P-) ou les deux, et le contrôleur (12) étant conçu pour détecter une tension électrique du pôle (P+, P-) et/ou d'une thermistance (T) au niveau de l'accumulateur d'énergie (14) par le biais de l'une ligne de mesure (42).

13. Circuit de contrôleur (22) selon l'une des revendications précédentes, le contrôleur (12) fournissant une fonction d'appel d'urgence eCall en tant que fonction de véhicule (F).

14. Véhicule à moteur (10) comprenant un circuit de contrôleur (22) selon l'une des revendications précédentes.

15. Procédé pour faire fonctionner un circuit de contrôleur (22), lequel prévoit un contrôleur (12) destiné à fournir une fonction de véhicule (F) ainsi qu'un accumulateur d'énergie (14) électrique, à l'extérieur d'un boîtier (18) du contrôleur (12), pour une alimentation de secours du contrôleur (12), l'accumulateur d'énergie (14) alimentant le contrôleur (12) en énergie électrique dans le cas où un courant d'alimentation (13) en provenance d'un réseau de bord (11) du véhicule à moteur (10) est manquant,
deux pôles électriques (P+, P-) de l'accumulateur d'énergie (14) étant connectés au contrôleur (12) par le biais d'un câble (19) et l'un des deux pôles électriques (P+, P-) étant connecté par le biais d'un élément de commutation (24) à un potentiel de masse (17) du réseau de bord et
au moins un circuit de mesure (27) couplant respectivement l'un des pôles (P+, P-) au potentiel de masse (17) et générant un signal de mesure (32), lequel est corrélé avec une tension électrique qui chute entre le pôle (P+, P-) respectif et le potentiel de masse (17), et
un circuit de commande (12') de l'élément de commutation (24) maintenant l'élément de commutation (24) électriquement conducteur dans un régime normal du contrôleur (12) et commutant l'élément de commutation (24) électriquement bloquant, au moins dans le cas où le signal de mesure (32) respectif de l'au moins un circuit de mesure (27) signale que la tension respective est supérieure à une valeur de seuil prédéterminée, et annulant ainsi un couplage électrique (23) avec le potentiel de masse (17).
